# EUROPEAN PATENT APPLICATION

(11) **EP 4 583 333 A1**
(43) Date of publication of application: **09.07.2025**
(21) Application number: 24150302.8
(22) Date of filing: 04.01.2024
(51) Int. Cl.: H02B 11/04, H01H 33/02

(54) **MEDIUM VOLTAGE SWITCH CONTACT ASSEMBLY**

(71) Applicant: ABB Schweiz AG, 5400 Baden (CH)
(72) Inventor: Cenci, Claudio, I-24044 Dalmine (BG) (IT); Premarini, Stefano, I-24044 Dalmine (BG) (IT)
(74) Representative: De Bortoli, Eros

(57) **Abstract**

A Medium Voltage switch contact assembly (1) comprising:
- a contact arm (2) comprising:
- a conductive elongated body (21) developing along a longitudinal axis (50) and having a first end (211) connected to an electrical terminal and a second end (212) opposite to said first end (211);
- an insulating protection (22) enclosing at least a portion of said elongated body (21);

- a contact element (3) positioned at the second end (212) of said conductive elongated body (21) and adapted to couple with/uncouple from a corresponding counter-contact with a linear movement along said longitudinal axis (50),
- a sensing device arrangement (4).

The sensing device arrangement (4) comprises a sensor device (41) which is provided with a fixing belt (42) forming a loop wrapped around said conductive elongated body (21) and removably fixing said sensing device arrangement (4) onto said conductive elongated body (21)

## Description

The present invention relates to a Medium Voltage switch contact assembly provided with an innovative sensor system. In particular, the present invention relates to a Medium Voltage switch contact assembly, which is provided with an improved and properly positioned sensing device arrangement. In a further aspect, the present invention relates to Medium Voltage switchgear, in particular a Medium Voltage circuit breaker, provided with a switch contact assembly as described herein.

For the purposes of the present invention, the term Medium Voltage is intended to designate electrical systems operating at voltage levels higher than 1 kV AC and 1.5 kV DC up to some tens of kV, e.g., up to 72 kV AC and 100 kV DC.

It is known that Medium Voltage switching devices, such as, e.g., circuit breakers, disconnectors, contactors, can be normally provided with sensing equipment to detect operative conditions (e.g., current, tension) and/or ambient condition (e.g., temperature, pressure).

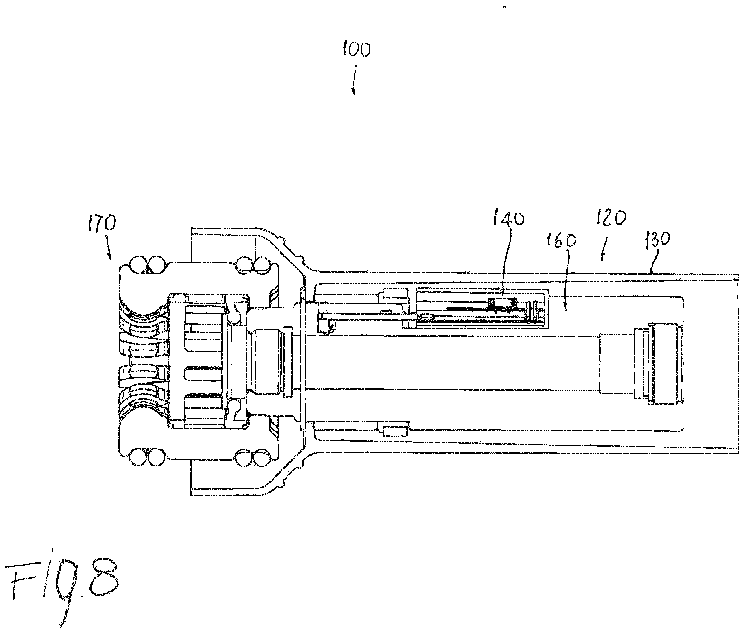

In a typical application in the Medium Voltage field, such as in withdrawable circuit breaker application, the disconnector contact arrangement is provided with a switch contact assembly of the type represented in figure 8.

In such arrangement, the switch contact assembly 100 normally comprises a contact arm 120 constituted by a conductive elongated body 160 enclosed in an insulating protection casing 130. A contact element 170 is positioned at an operative end of the contact arm 120 and is movable between a disconnected position and an inserted position in a corresponding fixed contact (not shown).

The switch contact assembly 100 comprises a temperature sensor 140 which is embedded into the conductive elongated body 160 of the contact arm 120 and is insulated by the assembled insulating protection casing 130.

One of the major drawbacks of this type of known solution is given by the fact that it requires a dedicated design of the insulating protection casing 130 as well as a dedicated design of the conductive elongated body 160.

Moreover, alternative insulating protection with respect to the assembled insulating casing 130, e.g., an over-moulded insulating protection cannot be used.

A further drawback is given by the need to disassemble the contact arm 120 to install the temperature sensor 140 after commissioning.

In practice, when there is a need of installing a temperature sensor after commissioning, solutions of this type require a replacement of the contact arm 120 in order to install the temperature sensor 140 using a jig during the assembling process.

It is also worth noting that these solutions require a number of dedicated additional components (such as, e.g., silicon rings, o-rings, etc.) with respect to the solution without sensor, with a consequent increase of costs and complexity.

Many attempts and proposals have been made in order improve the design of switch contact assemblies equipped with sensor devices, but the proposed solutions, however, are not always completely satisfactory in terms of performances, complexity of the design, costs and time of installation, costs and time for maintenance and similar drawbacks.

The main aim of the present invention is to provide a Medium Voltage switch contact assembly, which allows overcoming or at least mitigating the drawbacks of the known art.

Within this aim, a purpose of the present invention is to provide a Medium Voltage switch contact assembly which is provided with sensor means, in particular temperature sensing means properly positioned.

A further purpose of the present invention is to provide a Medium Voltage switch contact assembly provided with sensor means, which does not a require dedicated design of the insulating protection.

A further purpose of the present invention is to provide a Medium Voltage switch contact assembly provided with sensor means, which does not a require dedicated design of the of the conductive part(s).

A further purpose of the present invention is to provide a Medium Voltage switch contact assembly provided with sensor means, in which assembled or over-moulded insulating protection can be used.

A further purpose of the present invention is to provide a Medium Voltage switch contact assembly provided with sensor means, in which the sensor means can be easily assembled/removed also after commissioning.

A further purpose of the present invention is to provide a Medium Voltage switch contact assembly provided with sensor means, in which the number of additional components (silicon rings, o-rings, and similar) required with respect to the solution without sensor is minimal.

A further purpose of the present invention is to provide a Medium Voltage switch contact assembly provided with sensor means, which has a relatively simple construction, is easy and cheap to be manufactured at industrial levels, and is easy and cheap to be maintained.

The above aim and purposes, as well as other purposes that will emerge clearly from the following description and attached drawings, are provided, according to the invention, by a Medium Voltage switch contact assembly, according to the following claim 1 and the related dependent claims.

In further aspects, the present invention also relates to a Medium Voltage switchgear comprising a Medium Voltage switch contact assembly as described herein.

In a general definition of the invention, the Medium Voltage switch contact assembly according to the present invention comprises a contact arm which in turn comprises; a conductive elongated body developing along a longitudinal axis and having a first end connected to an electrical terminal and a second end opposite to said first end; and an insulating protection enclosing at least a portion of said elongated body.

Furthermore, the Medium Voltage switch contact assembly of the invention comprises a contact element positioned at the second end of said conductive elongated body and adapted to couple with/uncouple from a corresponding counter-contact with a linear movement along said longitudinal direction; and a sensing device arrangement.

In particular, the presently disclosed Medium Voltage switch contact assembly is characterized in that said sensing device arrangement comprises a sensor device which is provided with a fixing belt forming a loop wrapped around said conductive elongated body and removably fixing said sensing device arrangement onto said conductive elongated body.

For the purposes of the present invention, the terms "first end" and "second end" are not meant to designate the physical limits of the conductive elongated body but the operational points of the conductive elongated body in which the designated functions are carried out.

Also, for the purposes of the present invention, the term "removably fixing" is meant to designate that the sensing device arrangement is not embedded in a particular part, e.g., in the contact arm, of the overall contact assembly.

In this way, as better described hereinafter, in the Medium Voltage switch contact assembly of the invention, the design and the positioning of the sensing device arrangement - and in particular its removable fixing on a particular position of the conductive elongated body using a wrapping element - provides an efficient system for providing the switch contact assembly with sensing means that can be easily installed and removed without requiring cumbersome operations.

In the following detailed description, the invention will be described with reference to a Medium Voltage switchgear, e.g. a Circuit Breaker, which is provided with a contact assembly equipped with a temperature sensor but, in general, it can be applied to any type of Medium Voltage switchgear and any type of sensing device that is required depending on the operational needs.

In practice, the Medium Voltage switch contact assembly of the invention has a "modular" structure in the sense that sensor can be installed on a "base" version of the switch contact assembly even after the commissioning of the CB without the need of disassembling the contact arms and, consequently, without the need of using jigs.

In practice, the modular solution can be obtained by installing the sensing device arrangement on a proper position of the conductive elongated body between the contact element, e.g., a tulip contact element, and the insulating protection enclosure.

In this way, it is possible to install the sensing device arrangement by disassembling only the contact element, e.g., the tulip contact element, with no need of a jig for field installation.

At the same time, it is possible to remove or replace the sensing device arrangement, without having to remove the contact arm and the insulating protection enclosure.

Moreover, it is worth noting that a specific design of the insulating protection enclosure and of the conductive parts, i.e., of the conductive elongated body is not required and either an over-moulded insulating protection or an assembled insulating protection can be used, depending on the operational needs.

In addition, the presently disclosed Medium Voltage switch contact assembly is advantageous also from an economic standpoint, since it does not require additional components (e.g., silicon rings, o-rings, and similar components) with respect to the standard solutions, except for the sensor itself.

In some embodiments of the Medium Voltage switch contact assembly of the invention, the insulating protection may comprise an insulating casing which is assembled onto at least a portion of said conductive elongated body.

Alternatively, in other embodiments of the Medium Voltage switch contact assembly of the invention, the insulating protection be over-moulded onto at least a portion of said conductive elongated body.

According to some largely preferred embodiments of the Medium Voltage switch contact assembly of the present invention, the sensing device arrangement may be advantageously fixed onto the conductive elongated body proximate to the second end of said conductive elongated body.

In other general embodiments of the presently disclosed Medium Voltage switch contact assembly, the insulating protection may conveniently comprise a cup shaped protrusion which is positioned around the second end of said conductive elongated body.

In such a case, said cup shaped protrusion may have a design that comprise: a bottom wall with a hole for the passage of said conductive elongated body; a lateral wall surrounding at a distance said conductive elongated body; and an aperture opposite with respect to said bottom wall for the passage of said contact element.

In these latter embodiments of the Medium Voltage switch contact assembly of the invention, the sensing device arrangement may be appropriately positioned in the cup shaped protrusion of the insulating protection.

In particular, the sensing device arrangement may be positioned in the cup shaped protrusion of the insulating protection between the bottom wall of said cup shaped protrusion and said contact element. In practice, in these embodiments, the cup shaped protrusion of the insulating protection forms a sort of a chamber around the second end of said conductive elongated body into which the sensing device arrangement is conveniently positioned.

In general embodiments of the presently disclosed Medium Voltage switch contact assembly, the contact element, e.g., a tulip contact element, may be removably mounted on the second end of said conductive elongated body.

In this way, when the insulating protection comprises a cup shaped protrusion which is positioned around the second end of said conductive elongated body, the removal of said contact element from the second end of said conductive elongated body may provide access to said cup shaped protrusion through said aperture. Consequently, it is possible to install, remove or replace the sensing device arrangement by disassembling only the contact element, e.g., the tulip contact element, with no need of a jig for field installation and without having to remove the contact arm and/or the insulating protection enclosure.

In particular, in these embodiments of the Medium Voltage switch contact assembly of the invention, said cup shaped protrusion may conveniently extend over at least a portion of said contact element.

According to some particular embodiments of the Medium Voltage switch contact assembly of the present invention, the fixing belt of the sensing device arrangement may be made of a magnetic material. In this way, the magnetic fixing belt which forms a loop around said conductive elongated body may represent the magnetic core of a power supply arrangement harvesting power from the current flowing along said conductive elongated body. To this purpose, the power supply arrangement further includes a secondary winding conductor which is wound around at least a portion of the fixing belt of magnetic material and which is used to feed the sensing means and/or the related electronics with the required electric power.

In other general embodiments of the presently disclosed Medium Voltage switch contact assembly, the sensor device of the sensing device arrangement may conveniently comprise a casing in which the sensing means and the related electronics may be housed. The casing is then operatively connected connected to the fixing belt so that it can be removably fixed onto said conductive elongated body, as better described in the following detailed description.

Further features and advantages of the present invention will be more apparent from the description of preferred but not exclusive embodiments of the present invention, shown by way of examples in the accompanying drawings, wherein:
- Figure 1 is a section view of an embodiment of a Medium Voltage switch contact assembly, according to the present invention;
- Figure 2 is an exploded view of an embodiment of a Medium Voltage switch contact assembly, according to the present invention;
- Figure 3 is an enlarged section view of a detail of an embodiment of a Medium Voltage switch contact assembly, according to the present invention;
- Figure 4 is a perspective view of an embodiment of a Medium Voltage switchgear including a Medium Voltage switch contact assembly, according to the present invention;
- Figure 5 is a side view of an embodiment of a Medium Voltage switchgear including a Medium Voltage switch contact assembly, according to the present invention;
- Figure 6 is a side view with a partial section of an embodiment of a Medium Voltage switchgear including a Medium Voltage switch contact assembly, according to the present invention;
- Figure 7 is a partially exploded perspective view of an embodiment of a Medium Voltage switchgear including a Medium Voltage switch contact assembly, according to the present invention;
- Figure 8 is a section view of a Medium Voltage switch contact assembly according to the prior art.

With reference to the attached figures, the present invention - in its more general definition - relates to a Medium Voltage switch contact assembly 1.

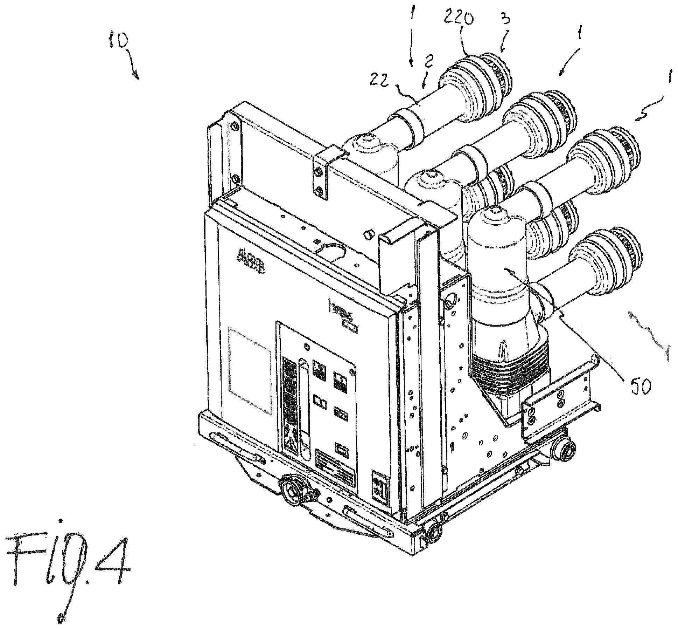

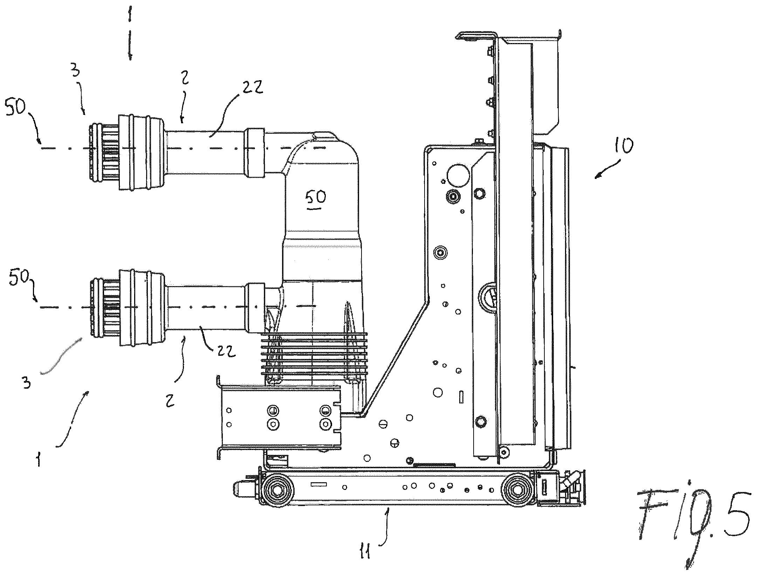

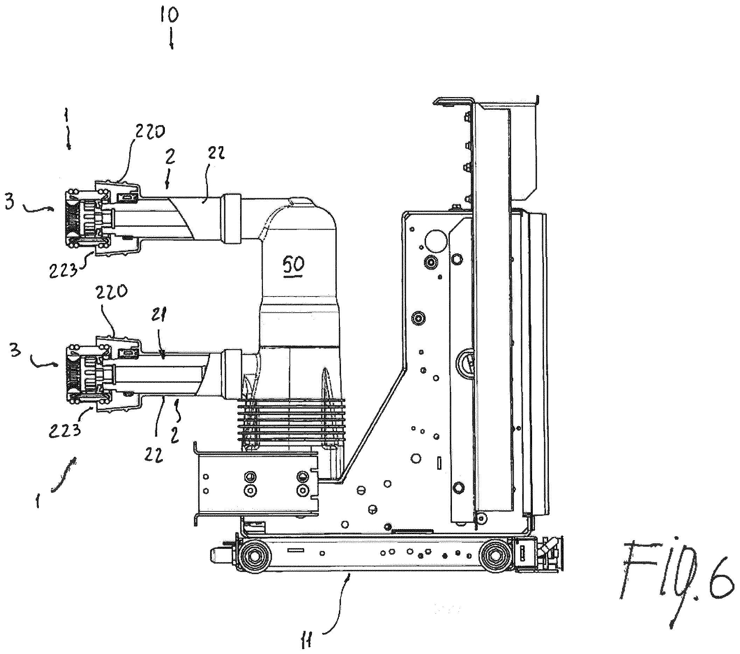

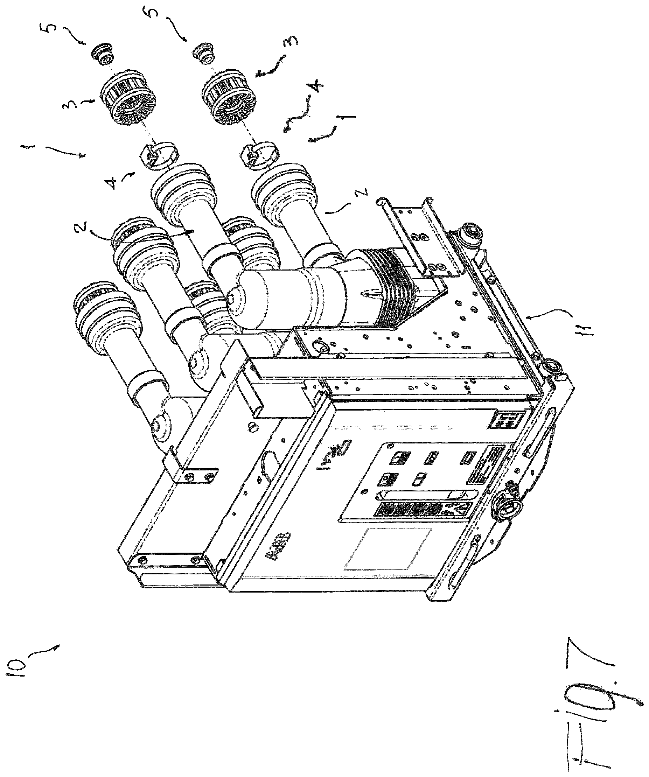

In the embodiments shown in Figures 4-7, the Medium Voltage switch contact assembly 1 is part of a MV switchgear 10 having a withdrawable circuit breaker unit 50 mounted on a movable truck 11. Each phase of the circuit breaker unit 50 is provided with a pair of Medium Voltage switch contact assemblies 1 that are adapted to couple with/uncouple from corresponding counter-contacts in the switchgear (not shown) according to design and functioning principle which are well known in the art and therefore will not be described with further details.

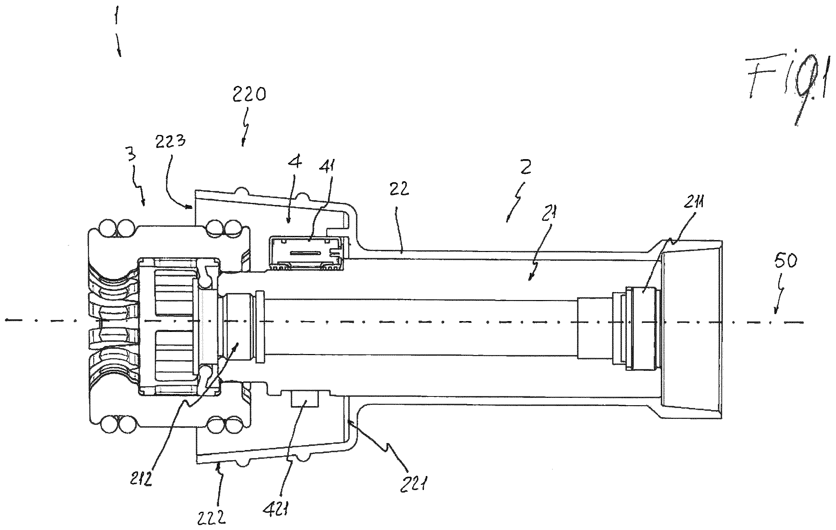

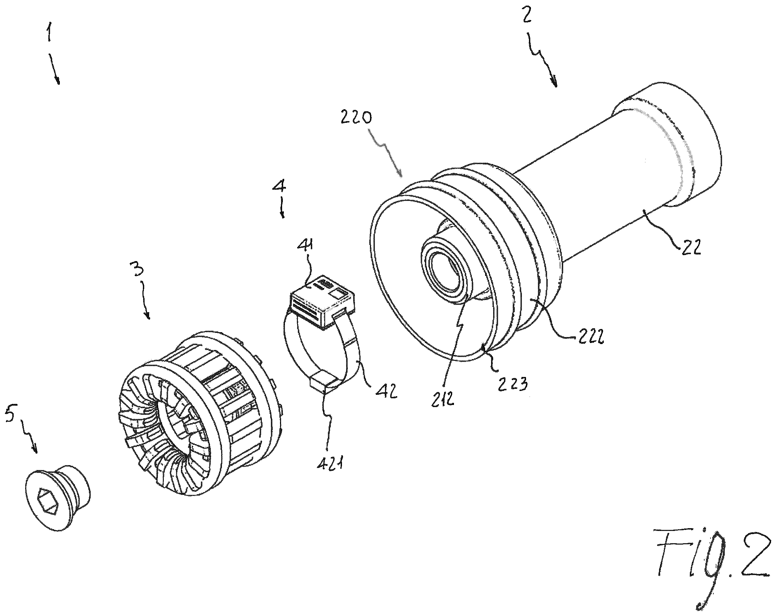

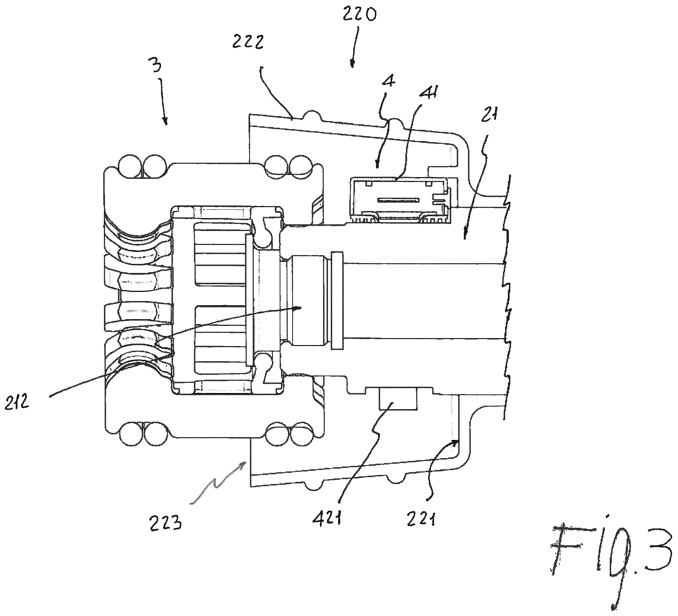

With particular reference to Figures 1-3, the Medium Voltage switch contact assembly 1 of the invention comprises a contact arm 2.

In turn, the contact arm 2 comprises a conductive elongated body 21 which develops along a longitudinal axis 50 which, in the embodiment shown in Figures 4-7, is substantially aligned with the direction of movement of the truck 11 onto which the circuit breaker unit 50 is mounted.

The conductive elongated body 21 has a first end 211 which is electrically connected to an electrical terminal (not shown), e.g., an electrical terminal of the circuit breaker unit 50, and a second end 212 opposite to said first end 211.

Furthermore, the conductive elongated body 21 is provided with an insulating protection 22 which encloses at least a portion of said conductive elongated body 21.

Depending on the application, in some cases the insulating protection 22 may comprise an insulating casing which is assembled onto at least a portion of said conductive elongated body 21.

Alternatively, in some other applications of the Medium Voltage switch contact assembly 1 of the invention, the insulating protection 22 may be over-moulded onto at least a portion of said conductive elongated body 21.

Indeed, one of the advantages of the present invention is that the solution presently devised can be used with over-moulded insulating protection systems, as well as with assembled insulating protection systems.

The Medium Voltage switch contact assembly 1 of the invention further comprises a contact element 3 which is positioned at the second end 212 of said conductive elongated body 21. The contact element 3 is adapted to couple with/uncouple from a corresponding counter-contact in a switchgear unit 10, with a linear movement along said longitudinal axis 50.

In the embodiment of the switch contact assembly 1 shown in the Figures, the contact element 3 is of the so-called tulip type. Tulip-type contacts are well known in the art and therefore will not be described with further details.

Moreover, the Medium Voltage switch contact assembly 1 of the invention further comprises a sensing device arrangement 4, which can be, for instance, a temperature sensor arrangement. Other types of sensors, e.g., pressure, voltage or current sensors, can be used according to the operative needs.

One of the peculiar features of the Medium Voltage switch contact assembly 1 of the invention is given by the fact that the sensing device arrangement 4 comprises a sensor device 41 which is provided with a fixing belt 42.

In the embodiment shown, the fixing belt 42 forms a loop which is wrapped in an appropriate position around the conductive elongated body 21, and is provided with a closing device 421; in this way, the sensing device arrangement 4 can be removably fixed said onto said conductive elongated body 21.

In practice, the sensor device 41 can be fixed onto the conductive elongated body 21 and kept in position by a metal bracelet 42 which is wound around the conductive elongated body 21 and closed by a reversible closing device 421. In this way, the sensor device 41 can be fixed on removed from the conductive elongated body 21 very easily and quickly.

Differently from the prior art solutions, in the Medium Voltage switch contact assembly 1 of the invention, the sensing device arrangement 4 is not embedded into the contact arm 2 but is fixed in a position of the conductive elongated body 21 which is easily accessible without having the need of disassembling the whole contact arm 2 to install the sensing system after commissioning.

In particular, as shown in the attached Figures 1-3, the sensing device arrangement 4 is conveniently positioned proximate to the second end 212 of the conductive elongated body 21 and is therefore easily accessible.

Always with reference to the embodiments of the attached Figures, in the Medium Voltage switch contact assembly 1 the insulating protection 22 comprises a cup shaped protrusion 220 which is positioned around the second end 212 of said conductive elongated body 21.

In particular, the cup shaped protrusion 220 comprises a bottom wall 221 which is provided with a hole for the passage of said conductive elongated body 21. A lateral wall 222 develops from the bottom wall 221 and surrounds at a distance the second end 212 of said conductive elongated body 21. On a side opposite with respect to said bottom wall 221 the lateral wall 222 forms an aperture 223 for the passage of said contact element 3, in particular of the tulip contact element 3.

In practice, the cup shaped protrusion 220 of the insulating protection 22 forms a sort of a chamber around the second end 212 of the conductive elongated body 21 into which the sensing device arrangement 4 may be conveniently positioned.

In a particularly preferred embodiment of the Medium Voltage switch contact assembly 1 of the invention, the sensor device 41 and the fixing belt 42 forming the sensing device arrangement 4 are positioned on the conductive elongated body 21 inside the cup shaped protrusion 220, in a position between the bottom wall 221 of the cup shaped protrusion 220 and the second end 212 of the conductive elongated body 21, i.e., the position where the contact element 3 is mounted.

Moreover, the contact element 3 is removably mounted on the second end 212 of said conductive elongated body 21 using reversible fixing means 5, for instance screw means or similar means.

In this way, the removal of the contact element 3 from the second end 212 of the conductive elongated body 21 provides free access to the inside of the cup shaped protrusion 220 through the aperture 223 which is delimited by the lateral walls 222 of said cup shaped protrusion 220, thereby allowing installation, removal or replacement of the sensing device arrangement 4 positioned inside the cup shaped protrusion 220.

Thus, conversely with respect to the known solution, the operation of installation, removal or replacement of the sensing device arrangement 4 can be carried out very easily and also after commissioning, with no need of a jig and without having to remove the entire contact arm 2 and/or the insulating protection enclosure 22. In practice, in the embodiment shown in the Figures it is sufficient to disassemble the tulip contact element 3 from the terminal part 212 of the conductive element 21 to carry out the desired operation of installing/removing/replacing the sensing device arrangement 4, by opening/closing the fixing belt 42 through the closing device 421.

Advantageously, as shown in the Figures, the cup shaped protrusion 220 extends over a portion of said contact element 3, so as to allow the coupling/decoupling of the contact element 3 with/from the corresponding counter-contact and at the same protecting the sensing device arrangement 4 housed in its internal space.

In the preferred embodiments of the Medium Voltage switch contact assembly represented in the Figures, the sensor device 41 comprises a casing housing the sensing means, e.g. a temperature sensor, and the related electronics. The casing is operatively connected to the fixing belt 42 so that it can be fixed onto/removed from the conductive elongated body 21 as previously described.

For instance, in a particular embodiment of the Medium Voltage switch contact assembly, when the fixing belt 42 of the sensing device arrangement 4 is made of a magnetic material as previously briefly described, the fixing belt 42 can be partially positioned inside the casing and the secondary winding conductor can be wound around the portion of the fixing belt located inside the casing. The secondary winding conductor is then used to feed the sensor and/or the related electronics with the required electric power.

It is therefore clear from the above that the Medium Voltage switch contact assembly of the present disclosure, fully achieve the intended aims and purposes.

Indeed, the sensor is included in a portion of the contact arm which is not visible when assembled (and therefore is protected with respect to the external environment), but at the same time is easily accessible for installation, removal or replacement operation thereof.

Moreover, a change of technology of the insulating protection is not needed, since the presently disclosed solution can be applied to over-moulded insulating protection as well as to assembled insulating protection.

From a manufacturing standpoint, the presently disclosed electrical Medium Voltage switch contact assembly is very easy to manufacture and requires only a very limited number of components with consequent advantages in terms of costs.

The system of the present invention is particularly effective in Medium Voltage switchgears, and therefore a Medium Voltage switchgear including a Medium Voltage switch contact assembly as disclosed herein is a specific object of the present invention.

The contingent shapes, materials, and dimensions can be any according to the needs and any variations in this respect shall be considered as part of the present invention.

## Claims

1. A Medium Voltage switch contact assembly (1) comprising:
- a contact arm (2) comprising:
- a conductive elongated body (21) developing along a longitudinal axis (50) and having a first end (211) connected to an electrical terminal and a second end (212) opposite to said first end (211);
- an insulating protection (22) enclosing at least a portion of said elongated body (21);
- a contact element (3) positioned at the second end (212) of said conductive elongated body (21) and adapted to couple with/uncouple from a corresponding counter-contact with a linear movement along said longitudinal axis (50),
- a sensing device arrangement (4),
**characterized in that** said sensing device arrangement (4) comprises a sensor device (41) which is provided with a fixing belt (42) forming a loop wrapped around said conductive elongated body (21) and removably fixing said sensing device arrangement (4) onto said conductive elongated body (21).

2. The Medium Voltage switch contact assembly (1), according to claim 1, wherein said sensing device arrangement (4) is fixed onto the conductive elongated body (21) proximate to said second end (212) of said conductive elongated body (21).

3. The Medium Voltage switch contact assembly (1), according to claim 1 or 2, wherein said insulating protection (22) comprises an insulating casing assembled onto at least a portion of said conductive elongated body (21).

4. The Medium Voltage switch contact assembly (1), according to claim 1 or 2, wherein said insulating protection (22) is over-moulded onto at least a portion of said conductive elongated body (21).

5. The Medium Voltage switch contact assembly (1), according to one or more of the previous claims, wherein said insulating protection (22) comprises a cup shaped protrusion (220) around the second end (212) of said conductive elongated body (21).

6. The Medium Voltage switch contact assembly (1), according to claim 5, wherein said cup shaped protrusion (220) comprises a bottom wall (221) with a hole for the passage of said conductive elongated body (21), a lateral wall (222) surrounding at a distance said conductive elongated body (21) and an aperture (223) opposite with respect to said bottom wall (221) for the passage of said contact element (3).

7. The Medium Voltage switch contact assembly (1), according to claim 5 or 6, wherein said sensing device arrangement (4) is positioned in said cup shaped protrusion (220).

8. The Medium Voltage switch contact assembly (1), according to claim 7, wherein said sensing device arrangement (4) is positioned in the cup shaped protrusion (220) between the bottom wall (221) of said cup shaped protrusion (220) and said contact element (3).

9. The Medium Voltage switch contact assembly (1), according to one or more of the previous claims, wherein said contact element (3) is removably mounted on the second end (212) of said conductive elongated body (21).

10. The Medium Voltage switch contact assembly (1), according to claim 9 and one or more of claims 5-8, wherein removal of said contact element (3) from the second end (212) of said conductive elongated body (21) provides access to said cup shaped protrusion (220) through said aperture (223).

11. The Medium Voltage switch contact assembly (1), according to one or more of claims 5-10, wherein said cup shaped protrusion (220) extends over at least a portion of said contact element (3).

12. The Medium Voltage switch contact assembly (1), according to one or more of the previous claims, wherein the fixing belt (42) of said sensing device arrangement (4) is made of magnetic material.

13. The Medium Voltage switch contact assembly (1), according to one or more of the previous claims, wherein said contact element (3) is of the tulip type.

14. The Medium Voltage switch contact assembly (1), according to one or more of the previous claims, wherein said sensor device (41) comprises a casing housing sensing means and the related electronics, said casing being connected to said fixing belt (42).

15. A Medium Voltage switchgear (10) comprising a Medium Voltage switch contact assembly (1), according to one or more of the previous claims.
